# FASCICULE DE BREVET EUROPEEN

(11) **EP 3 332 440 B1**
(45) Date de publication et mention de la délivrance du brevet: **19.06.2019**
(21) Numéro de dépôt: 16748093.8
(22) Date de dépôt: 28.07.2016
(51) Int. Cl.: H01M 8/24, H01M 8/0206, H01M 8/0228, H01M 8/0254, H01M 8/026

(54) **EMPILEMENT POUR LA FABRICATION DE PLAQUES BIPOLAIRES POUR PILES A COMBUSTIBLE**
STAPEL ZUR HERSTELLUNG VON BIPOLARPLATTEN FÜR BRENNSTOFFZELLEN
STACK FOR MANUFACTURING BIPOLAR PLATES FOR FUEL CELLS

(30) Priorité: 07.08.2015 FR 1557597
(43) Date de publication de la demande: 13.06.2018
(73) Titulaire: Compagnie Générale des Etablissements Michelin, 63000 Clermont-Ferrand (FR)
(72) Inventeur: BLANC, Claude, 63040 Clermont-Ferrand Cedex 09 (FR)
(74) Mandataire: Noel, Luminita
(86) Numéro de dépôt international: PCT/EP2016/068093
(87) Numéro de publication internationale: WO 2017/025347

(56) Documents cités:
- WO-A1-2007/135507
- WO-A1-2012/163842
- DE-A1-102011 116 997
- US-A1- 2008 292 916

## Description

La présente invention concerne le domaine des piles à combustibles, notamment le domaine des piles à combustibles aptes à être utilisées dans les véhicules automobiles.

Une pile à combustible, par exemple du type à membrane échangeuse de protons à électrolyte solide (PEMFC), comprend habituellement un empilement de cellules élémentaires constituant des générateurs, chacune des cellules étant séparée des cellules adjacentes par des plaques bipolaires. A titre d'exemple, une pile à combustible est décrite dans la demande de brevet US 2008/0292916.

Le brevet US 2008/0292916 décrit des plaques bipolaires comprenant deux tôles superposées présentant des rainures opposées dont les fonds sont adjacents et entre lesquelles est insérée une matière de brasure.

La présente invention concerne plus particulièrement le domaine de la fabrication d'un empilement de plaques bipolaires.

Selon un mode de réalisation, il est proposé un empilement pour la fabrication de plaques bipolaires pour piles à combustibles, chaque plaque bipolaire comprenant deux tôles superposées entre lesquelles est insérée une matière de brasure, l'empilement comprenant alternativement, des plaques bipolaires et des plaques intercalaires.

Au moins une plaque intercalaire présente une pluralité de fentes la traversant dans le sens de son épaisseur.

Ainsi, la plaque intercalaire peut être empêchée de se déformer.

Au moins certaines des fentes peuvent s'étendre à partir des côtés de la plaque intercalaire, de façon à former des portions de la plaque intercalaire en porte-à-faux vers l'extérieur.

Les fentes de la plaque intercalaire peuvent être formées selon une disposition topographique symétrique par rapport au centre de la plaque intercalaire.

Au moins certaines des plaques intercalaires peuvent présenter des fentes formées selon des dispositions topographiques différentes.

Au moins certaines des plaques intercalaires placées de façon adjacentes respectivement à certaines de plaques bipolaires peuvent présenter des fentes formées selon des dispositions topographiques différentes.

Les tôles des plaques bipolaires peuvent présenter des rainures opposées dont les fonds sont adjacents, une couche de matière de brasure étant insérée entre ces fonds.

La présente invention pourra être mieux comprise par un mode de fabrication de plaques bipolaires, décrit à titre d'exemple de réalisation et illustré par le dessin sur lequel :
- La figure 1 représente un ensemble empilé incluant des plaques bipolaires et des plaques intercalaires ;
- La figure 2 représente une coupe partielle d'une plaque bipolaire ;
- La figure 3 représente une vue de face d'une plaque intercalaire ; et
- La figure 4 représente une vue de face d'une autre plaque intercalaire.

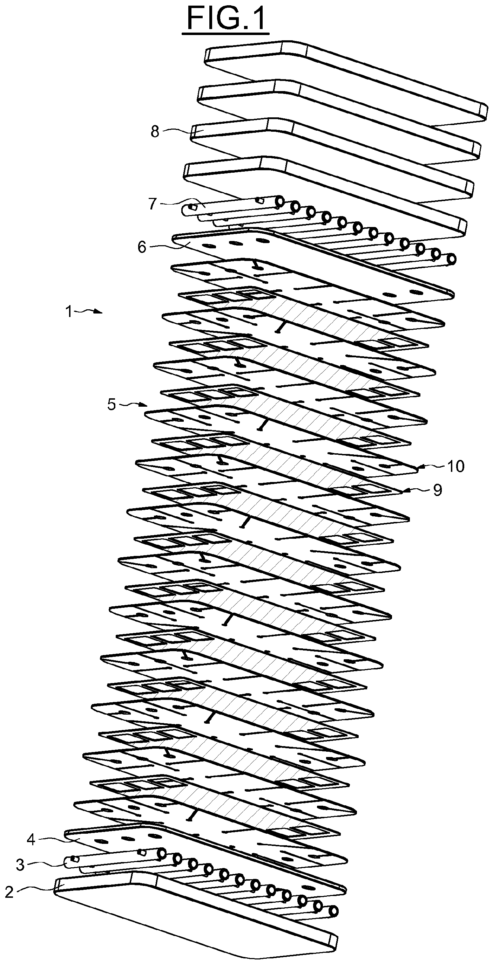

Comme illustré sur la figure 1, un ensemble empilé 1 comprend, du bas vers le haut, une plaque inférieure épaisse de support 2, une nappe 3 de tubes de découplage thermique, une plaque intermédiaire inférieure 4, un empilement 5, une plaque intermédiaire supérieure 6, une nappe 7 de tubes de découplage thermique et des plaques supérieures épaisses 8 superposées.

L'empilement 5 comprend, alternativement, des plaques bipolaires 9, à fabriquer, séparées par des plaques intercalaires 10. Les plaques bipolaires 9 et les plaques intercalaires 10 sont rectangulaires, les plaques intercalaires 10 étant plus grandes que les plaques bipolaires 9 de sorte que les plaques intercalaires 10 débordent par rapport au bord périphérique des plaques bipolaires 9.

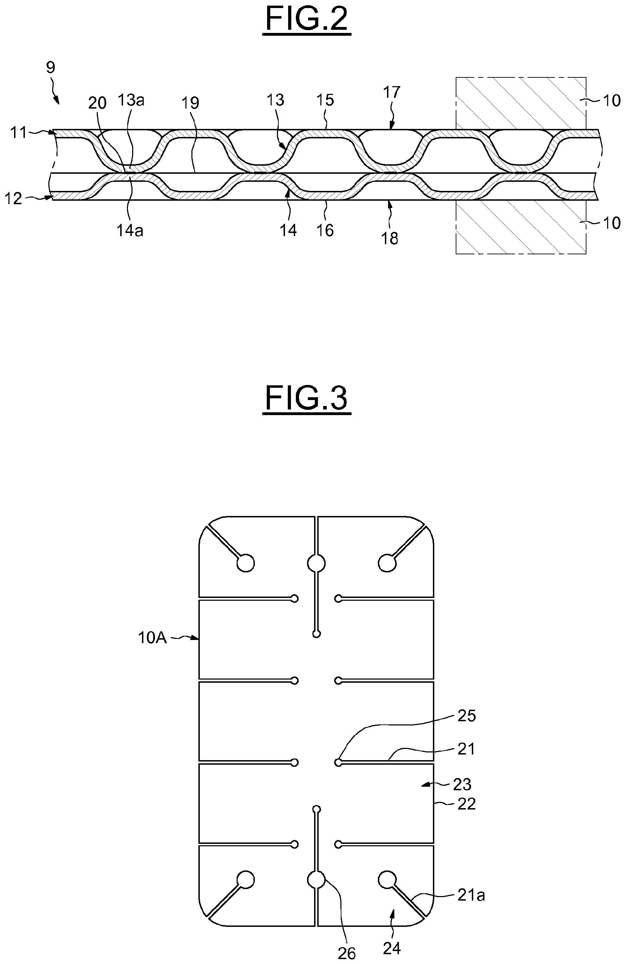

Comme illustré sur la figure 2, chaque plaque bipolaire 9 est formée, par exemple, par deux tôles embouties 11 et 12 superposées.

Les tôles embouties 11 et 12 sont formées de sorte à déterminer des pluralités de rainures ouvertes opposées 13 et 14, par exemple de sections en forme de U à branches symétriques divergentes, qui sont en retrait par rapport à des zones plates opposées 15 et 16 les séparant, ces zones plates 15 et 16 déterminant des faces opposées parallèles 17 et 18 de la plaque bipolaire 9.

Les fonds plats adjacents 13a et 14a des rainures 11 et 12 déterminent un plan de joint 19 parallèle aux faces opposées 17 et 18. Dans ce plan de joint 19 et entre respectivement les fonds plats 13a et 14a est prévue une couche 20 en un matériau de brasure. Cette couche 20 peut être formée par une feuille découpée.

Sur la figure 3 est illustrée une plaque intercalaire 10A qui présente une pluralité de fentes 21 la traversant dans le sens de son épaisseur et obtenues par découpe.

Les fentes 21 s'étendent depuis les côtés 22 de la plaque intercalaire 10A et jusque dans la zone centrale de cette dernière, perpendiculairement à ces côtés, de sorte que la plaque 10A est divisée en portions rectangulaires réduites 23 séparées par les fentes 21 et en porte-à-faux vers l'extérieur, ces portions 23 étant jointes à la portion centrale de la plaque 10A. Les fentes 21 peuvent être réparties de façon que ces portions 23 présentent par exemple des surfaces approximativement égales.

Des fentes 21a peuvent être prévues dans les coins de la plaque 10A, à 45° par rapport aux côtés de la plaque 10A, de façon à délimiter des portions triangulaires 24 en porte-à-faux vers l'extérieur. En outre, les extrémités intérieures des fentes 21 et/ou 21a peuvent déboucher dans des trous 25 et des trous intermédiaires 26 coupant certaines des fentes peuvent être prévus à distance des extrémités de ces fentes.

Préférentiellement, les fentes 21 et 21a sont formées selon une disposition topographique symétrique par rapport au centre de la plaque intercalaire 10A.

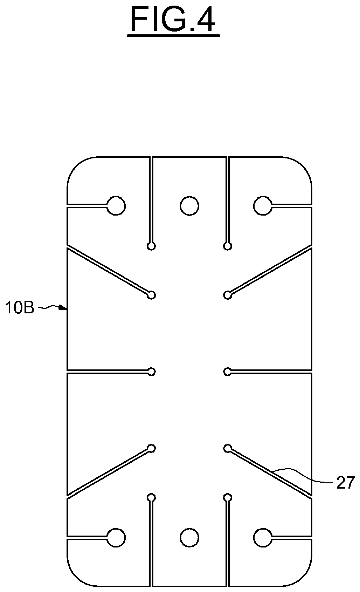

Sur la figure 4 est illustrée une plaque intercalaire 10B qui présente une pluralité de fentes 27 la traversant dans le sens de son épaisseur et obtenues par découpe.

L'ensemble des fentes 27 de la plaque intercalaire 10B et l'ensemble des fentes 21 et 21a de la plaque intercalaire 10A sont formées et réparties selon des dispositions topographiques différentes, de sorte que, lorsque les plaques 10A et 10B sont superposées, les fentes de la plaque intercalaire 10B ne se superposent pas aux fentes de la plaque intercalaire 10A. Néanmoins, lorsque les plaques 10A et 10B sont superposées, certaines des fentes de la plaque intercalaire 10B peuvent couper certaines des fentes de la plaque intercalaire 10A.

Par exemple, comme illustré sur la figure 4, certaines des fentes 27 de la plaque intercalaire 10B sont en oblique par rapport aux côtés de cette plaque 10B, tandis que d'autres fentes sont perpendiculaires aux côtés de la plaque intercalaire 10B. De façon équivalente à la plaque intercalaire 10A, les fentes 27 délimitent des portions 28 en porte-à-faux vers l'extérieur et jointes à la partie centrale de la plaque intercalaire 10B.

Là également, préférentiellement, les fentes 27 sont formées selon une disposition topographique symétrique par rapport au centre de la plaque intercalaire 10B.

Dans l'empilement 5 de la figure 1, il est avantageux que certaines des plaques intercalaires 10 soient constituées par des plaques intercalaires 10A de la figure 3 et que certaines autres soient constituées par des plaques intercalaires 10B de la figure 4. Préférentiellement, les plaques intercalaires 10 de l'empilement 5 sont constituées alternativement par des plaques intercalaires 10A et des plaques intercalaires 10B.

L'ensemble empilé 1 étant réalisé, on le place dans un four pour cuire la couche 20 en un matériau de brasure prévue entre les tôles 11 et 12, puis on refroidit l'ensemble empilé 1, de façon à induire la fixation des tôles 11 et 12 des plaques bipolaires 9.

Les plaques intercalaires 10 procurent notamment les avantages suivants.

Grâce à l'existence des fentes décrites précédemment, aménagées dans les plaques intercalaires 10, préférentiellement décalées d'une plaque intercalaire à l'autre dans l'empilement 5, les déformations éventuelles notamment par flexion et/ou gondolage des plaques intercalaires 10 sont considérablement réduites, lors du passage dans le four.

Il en résulte que les pressions exercées sur les faces 17 et 18 des tôles 11 et 12 de chaque plaque bipolaire 9 par les plaques intercalaires 10 adjacentes restent homogènes ou substantiellement homogènes sur toute leur surface.

Il en résulte que les pressions engendrées entre les fonds plats adjacents 13a et 14a des tôles 11 et 12, dans le plan de joint 19 contenant la couche 20 de matière de brasure, restent homogènes ou substantiellement homogènes sur toute leur surface.

Il en résulte que, lors de l'opération de brasure, les faces 17 et 18 des tôles 11 et 12 de chaque plaque bipolaire 9 sont maintenues parallèles.

Après quoi, on déstructure l'ensemble empilé 1 et on obtient des plaques bipolaires 9 fabriquées, dont les faces 17 et 18 sont parallèles.

Les plaques bipolaires fabriquées 9 sont destinées à être insérées entre des cellules élémentaires 4, constituant des générateurs électrochimiques, de façon à constituer un empilement pour piles à combustibles.

Comme les faces opposées 17 et 18 des plaques bipolaires 9 sont parallèles grâce à la mise en oeuvre des plaques intercalaires fendues 10, l'étanchéité et les contacts électriques d'un tel empilement pour piles à combustibles peuvent être assurés.

## Revendications

1. Empilement pour la fabrication de plaques bipolaires (9) pour piles à combustibles, chaque plaque bipolaire (9) comprenant deux tôles superposées (11, 12) entre lesquelles est insérée une matière de brasure (20), **caractérisé par le fait que** l'empilement comprend alternativement, des plaques bipolaires (9) et des plaques intercalaires (10) et qu'au moins une plaque intercalaire présente une pluralité de fentes (21) la traversant dans le sens de son épaisseur.

2. Empilement selon la revendication 1, dans lequel au moins certaines des fentes s'étendent à partir des côtés de la plaque intercalaire, de façon à former des portions de la plaque intercalaire en porte-à-faux vers l'extérieur.

3. Empilement selon l'une des revendications 1 et 2, dans lequel les fentes (21, 27) de la plaque intercalaire sont formées selon une disposition topographique symétrique par rapport au centre de la plaque intercalaire.

4. Empilement selon l'une quelconque des revendications précédentes, dans lequel au moins certaines des plaques intercalaires (10A, 10B) présentent des fentes (21, 27) formées selon des dispositions topographiques différentes.

5. Empilement selon l'une quelconque des revendications précédentes, dans lequel au moins certaines des plaques intercalaires (10A, 10B) placées de façon adjacente respectivement à certaines de plaques bipolaires présentent des fentes (21, 27) formées selon des dispositions topographiques différentes.

6. Empilement selon l'une quelconque des revendications précédentes, dans lequel les tôles (11, 12) des plaques bipolaires (9) présentent des rainures opposées (13, 14) dont les fonds (13a, 14a) sont adjacents, une couche (20) de matière de brasure étant insérée entre ces fonds.

## Patentansprüche

1. Stapel zur Herstellung von Bipolarplatten (9) für Brennstoffzellen, wobei jede Bipolarplatte (9) zwei übereinanderliegende Bleche (11, 12) umfasst, zwischen denen ein Lotmaterial (20) eingefügt ist, **dadurch gekennzeichnet, dass** der Stapel abwechselnd Bipolarplatten (9) und Zwischenplatten (10) umfasst und dass wenigstens eine Zwischenplatte mehrere Schlitze (21) aufweist, die sie in der Richtung ihrer Dicke durchqueren.

2. Stapel nach Anspruch 1, wobei sich wenigstens einige der Schlitze von den Seiten der Zwischenplatte aus erstrecken, so dass nach außen auskragende Abschnitte der Zwischenplatte gebildet werden.

3. Stapel nach einem der Ansprüche 1 und 2, wobei die Schlitze (21, 27) der Zwischenplatte gemäß einer symmetrischen topographischen Anordnung in Bezug auf den Mittelpunkt der Zwischenplatte ausgebildet sind.

4. Stapel nach einem der vorhergehenden Ansprüche, wobei wenigstens einige der Zwischenplatten (10A, 10B) Schlitze (21, 27) aufweisen, die gemäß unterschiedlichen topographischen Anordnungen ausgebildet sind.

5. Stapel nach einem der vorhergehenden Ansprüche, wobei wenigstens einige der Zwischenplatten (10A, 10B), die zu einigen Bipolarplatten jeweils benachbart angeordnet sind, Schlitze (21, 27) aufweisen, die gemäß unterschiedlichen topographischen Anordnungen ausgebildet sind.

6. Stapel nach einem der vorhergehenden Ansprüche, wobei die Bleche (11, 12) der Bipolarplatten (9) einander gegenüberliegende Rillen (13, 14) aufweisen, deren Böden (13a, 14a) benachbart sind, wobei eine Schicht (20) Lotmaterial zwischen diesen Böden eingefügt ist.

## Claims

1. Stack for manufacturing bipolar plates (9) for fuel cells, each bipolar plate (9) comprising two superimposed sheets (11, 12) between which a filler material (20) is inserted, **characterised by** the fact that the stack comprises, alternately, bipolar plates (9) and intermediate plates (10), and that at least one intermediate plate has a plurality of slots (21) passing through it in the direction of its thickness.

2. Stack according to Claim 1, wherein at least some of the slots extend from the edges of the intermediate plate, so as to form outwardly overhanging portions of the intermediate plate.

3. Stack according to either of Claims 1 and 2, wherein the slots (21, 27) of the intermediate plate may be formed in a topographic arrangement which is symmetrical about the centre of the intermediate plate.

4. Stack according to any of the preceding claims, wherein at least some of the intermediate plates (10A, 10B) have slots (21, 27) formed in different topographic arrangements.

5. Stack according to any of the preceding claims, wherein at least some of the intermediate plates (10A, 10B) placed adjacent to some of the bipolar plates respectively have slots (21, 27) formed in different topographic arrangements.

6. Stack according to any of the preceding claims, wherein the sheets (11, 12) of the bipolar plates (9) have opposed grooves (13, 14), the bottoms (13a, 14a) of which are adjacent, a layer (20) of filler material being inserted between these bottom.
